# EUROPEAN PATENT APPLICATION

(11) **EP 2 062 688 A2**
(43) Date of publication of application: **27.05.2009**
(21) Application number: 08169297.2
(22) Date of filing: 17.11.2008
(51) Int. Cl.: B24C 1/04, F01D 25/30

(54) **Noise attenuators and methods of manufacturing noise attenuators and bleed valve assemblies**

(30) Priority: 21.11.2007 US 943741
(71) Applicant: Honeywell International Inc., Morristown, NJ 07962 (US)
(72) Inventor: Appleby, Andrew, Phoenix, AZ 85055 (US); Aizaz, Amer, Phoenix, AZ 85044 (US); Hitzler, Dan, Chandler, AZ 85226 (US)
(74) Representative: Buckley, Guy Julian

(57) **Abstract**

Methods (700) of manufacturing a noise attenuator (206) are provided. In an embodiment, by way of example only, the method (700) includes shaping (702) a plate (902) to have a three-dimensional contour, and forming a plurality of openings (218, 918) through the shaped plate (902) with an abrasive fluid jet to thereby form the bleed valve noise attenuator (206). In another embodiment, a bleed valve assembly is provided. By way of example only, the assembly includes a plate (902) having a three-dimensional contour including a rim section (402, 920) surrounding a dome section (404, 922) and a plurality of openings (218, 918) formed in at least one of the rim section (402, 920) and the dome section (404, 922), the plate (902) comprising a material having no recast material thereon.

## Description

### TECHNICAL FIELD

The inventive subject matter generally relates to bleed valve assemblies, and more particularly relates to noise attenuators and methods of manufacturing bleed valve assemblies and noise attenuators.

### BACKGROUND

Gas turbine engines may be used to power aircraft and may include a fan section, a compressor section, a combustor section, a turbine section, and an exhaust section. The fan section is positioned at the front, or "inlet" section of the engine, and includes a fan that induces air from the surrounding environment into the engine. The fan section accelerates a fraction of the air toward the compressor section. The remaining fraction of air is accelerated into and through a bypass plenum, and out the exhaust section. The compressor section includes a compressor that raises the pressure of the air it receives from the fan section to a relatively high level. The compressed air then enters the combustor section, where a ring of fuel nozzles injects a steady stream of fuel. The injected fuel is ignited by a burner, which significantly increases the energy of the compressed air. The high-energy compressed air then flows into and through the turbine section, causing rotationally mounted turbine blades to rotate and generate energy. The air exiting the turbine section is exhausted from the engine via the exhaust section, and the energy remaining in this exhaust air aids the thrust generated by the air flowing through the bypass plenum.

Many gas turbine engines, such as the above-described turbofan gas turbine engine, include one or more bleed valve assemblies to selectively bleed air from the compressor section to prevent the compressor from exceeding its surge limits. In this regard, a bleed valve assembly typically includes a bleed valve and a bleed air duct. When the bleed valve is open, the bleed valve duct directs bleed air flow into the bypass plenum.

To minimize noise that may be produced from the bleed air flow, one or more of the outlet ports of the bleed air ducts may include a noise attenuator. Typically, the noise attenuator may be mounted to or may be in communication with the outlet port to receive the bleed air. In many cases, the noise attenuator includes hundreds, and sometimes thousands, of openings so that the received air can flow through the openings and become diffused.

Although the aforementioned noise attenuators are generally safe, robust, and reliable, they may be improved. In particular, noise attenuators are made from reliable materials capable of being subjected to temperatures of the bleed air; however, they may have a relatively short useful life as compared to surrounding bleed valve assembly components. As a result, they may be replaced more often than their surrounding components, which may undesirably increase maintenance costs of the bleed valve assembly.

Hence, it is desirable to have a bleed valve assembly and noise attenuator that is improved over the prior art. In particular, it is desirable to have a noise attenuator that has an increased useful life over prior art noise attenuators. Additionally, it is desirable to have a method of manufacturing the noise attenuator that is relatively inexpensive and simple to perform and that produces noise attenuators having improved useful lives. The inventive subject matter addresses one or more of these needs.

### BRIEF SUMMARY

Methods of manufacturing a noise attenuator are provided.

In an embodiment, by way of example only, the method includes shaping a plate to have a three-dimensional contour, and forming a plurality of openings through the shaped plate with an abrasive fluid jet to thereby form the bleed valve noise attenuator.

In another embodiment, by way of example only, the method includes shaping a plate to have a three-dimensional contour, forming a plurality of openings through the shaped plate with an abrasive fluid jet to thereby form a noise attenuator, and coupling the noise attenuator to a bleed flow duct.

In still another embodiment, a bleed valve assembly is provided. By way of example only, the assembly includes a plate having a three-dimensional contour including a rim section surrounding a dome section and a plurality of openings formed in at least one of the rim section and the dome section, the plate comprising a material having no recast material thereon.

### BRIEF DESCRIPTION OF THE DRAWINGS

The inventive subject matter will hereinafter be described in conjunction with the following drawing figures, wherein like numerals denote like elements, and

FIG. 1 is a simplified cross section view of a multi-spool turbofan gas turbine jet engine, according to an embodiment;

FIG. 2 is a cross section view of a bleed valve assembly that may be used in the engine of FIG. 1, according to an embodiment;

FIGS. 3 and 4 are perspective views of a noise attenuator that may be used in the bleed valve assembly shown in FIG. 2, according to an embodiment;

FIGS. 5 and 6 are cross section and partial cross section views, respectively, of the noise attenuator depicted in FIGS. 3 and 4, according to an embodiment;

FIG. 7 is a flow diagram of a method of manufacturing a noise attenuator, according to an embodiment;

FIG. 8 is a simplified cross section view of a system that may be used to manufacture a noise attenuator, according to an embodiment;

FIG. 9 is a top view of a plate that may be used to manufacture the noise attenuator shown in FIGS. 3-6, according to an embodiment; and

FIG. 10 is a close-up cross section view of a portion of plate shown in FIG. 9, according to an embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

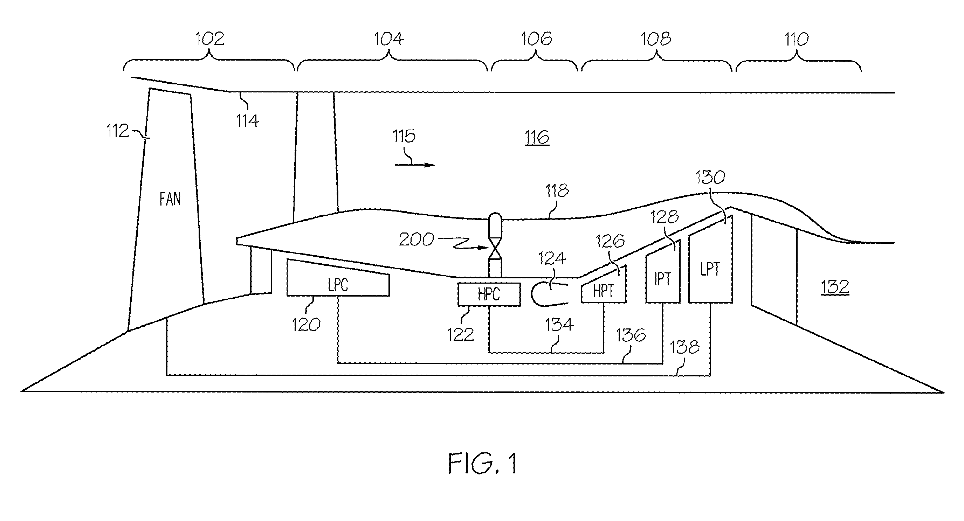

FIG. 1 is a simplified cross section view of a multi-spool turbofan gas turbine jet engine 100, according to an embodiment. The engine 100 may include an intake section 102, a compressor section 104, a combustion section 106, a turbine section 108, and an exhaust section 110, in an embodiment. The intake section 102 includes a fan 112, which is mounted in a fan case 114. The fan 112 draws air into the intake section 102 and accelerates it. A fraction of the accelerated air exhausted from the fan 112 flows, in a flow direction (referred to herein as a bypass air flow direction 115) through a bypass plenum 116 disposed between the fan case 114 and an engine cowl 118. The accelerated air provides a forward thrust. The remaining fraction of air exhausted from the fan 112 is directed into the compressor section 104.

In an embodiment, the compressor section 104 may include a low pressure compressor 120 and a high pressure compressor 122. Other embodiments may include one compressor, or may include more compressors (such as an intermediate compressor). In any case, the low pressure compressor 120 raises the pressure of the air directed into it from the fan 112, and directs the compressed air into the high pressure compressor 122. The high pressure compressor 122 compresses the air still further, and directs the high pressure air into the combustion section 106. In the combustion section 106, which includes a combustor 124, the high pressure air is mixed with fuel and combusted. The combusted air is then directed into the turbine section 108.

The turbine section 108 may include a high pressure turbine 126, an intermediate pressure turbine 128, and a low pressure turbine 130, disposed in axial flow series. In other embodiments, fewer or more turbines may alternatively be included. The combusted air from the combustion section 106 expands through each turbine, causing the turbine to rotate. The air is then exhausted through a propulsion nozzle 132 disposed in the exhaust section 110, providing addition forward thrust. As the turbines rotate, each drives equipment in the engine 100 via concentrically disposed shafts or spools. For example, in this embodiment, the high pressure turbine 126 drives the high pressure compressor 122 via a high pressure spool 134, the intermediate pressure turbine 128 drives the low pressure compressor 120 via an intermediate pressure spool 136, and the low pressure turbine 130 drives the fan 112 via a low pressure spool 138.

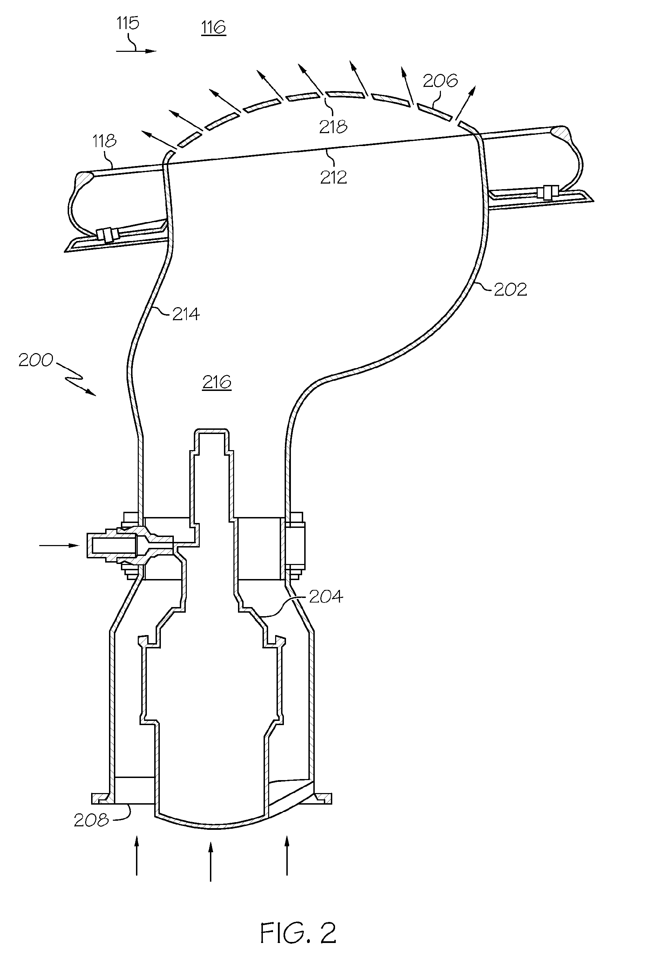

As is shown schematically in FIG. 1, a portion of the compressed air from the high pressure compressor may be selectively directed into the bypass plenum 116. To do so, one or more bleed valve assemblies 200 are disposed between the high pressure compressor 122 and the bypass plenum 116. FIG. 2 is a cross section view of a bleed valve assembly that may be used in the engine of FIG. 1, according to an embodiment. The bleed valve assembly 200 includes a bleed flow duct 202, a bleed valve 204, and a noise attenuator 206. The bleed flow duct 202 includes a bleed air inlet 208, a bleed air outlet 212, and an inner surface 214 that defines a bleed air flow passage 216 between the bleed air inlet 208 and bleed air outlet 212. The bleed air inlet 208 is coupled to a bleed air flow passage (not illustrated) that receives bleed air from the high pressure compressor 122, and the bleed air outlet 212 is coupled to the engine cowl 118. In the depicted embodiment, the bleed flow duct 202 is contoured such that bleed air is introduced into the noise attenuator in a substantially uniform manner, however, in other embodiments, the bleed flow duct 202 may not have to be contoured as such.

The bleed valve 204 may be mounted within the bleed flow duct 202 and is movable between a closed position and an open position. In the closed position, bleed air at the bleed air inlet 208 does not flow through the bleed air flow passage 216 to the bleed air outlet 212. Conversely, and as FIG. 2 depicts, when the bleed valve 204 is in the open position, bleed air at the bleed air inlet 208 flows into and through the bleed air flow passage 216, through the bleed air outlet 212, and into the bypass plenum 116 via the noise attenuator 206. Although the bleed valve 204 is shown as being located in the bleed valve 204, in other embodiments, the bleed valve 204 may be mounted in other locations within, or outside of, the bleed flow duct 202. Additionally, although the bleed valve 204 is shown as being a particular type, any one of numerous other types of valves may alternatively be used.

The noise attenuator 206 is positioned in the bleed valve assembly 200 such that bleed air that is discharged from the bleed flow duct 202 flows through the noise attenuator 206. In an embodiment, the noise attenuator 206 is disposed adjacent the bleed air outlet 212. For example, the noise attenuator 206 may be mounted on the bleed air outlet 212 and protrudes into the bypass plenum 116. To facilitate flow through the noise attenuator 206, a plurality of openings 218 are formed in, and extend through the noise attenuator 206. In an embodiment, each opening 218 may be oriented at a discharge angle such that, when the bleed valve 204 is in the open position, the bleed air, rather than being discharged unidirectional or omnidirectional, is discharged from a majority of the openings 218 in a direction that opposes the bypass air flow direction 115.

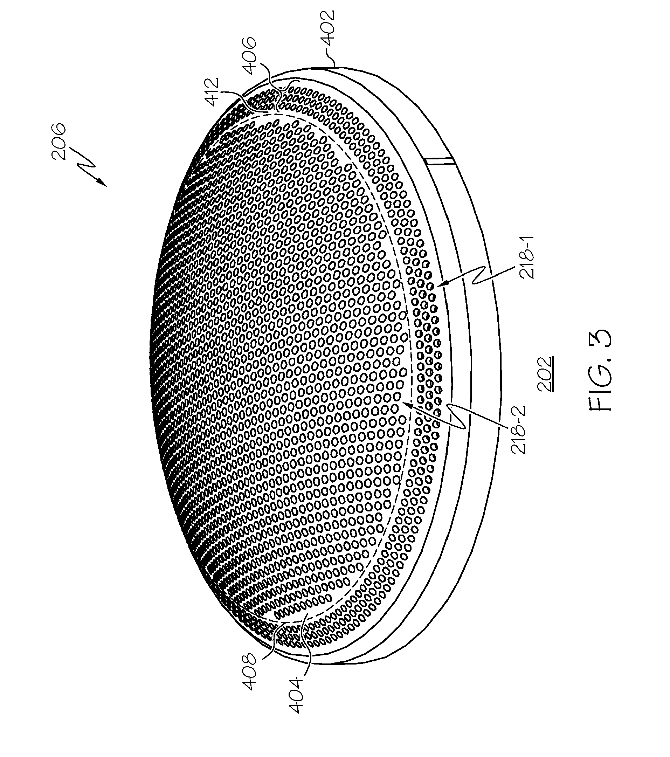

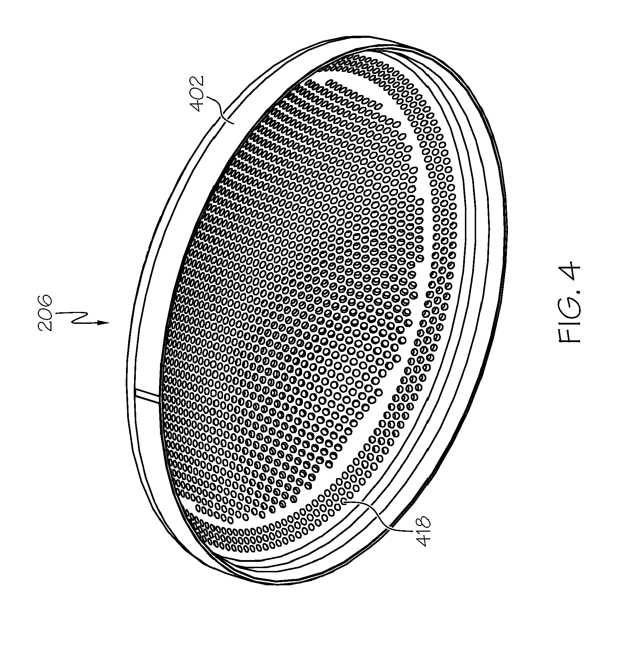

Turning now to FIGS. 3 and 4, perspective views of the noise attenuator 206 are shown. In an embodiment, the noise attenuator 206 includes a rim section 402 and a dome section 404. The rim section 402 extends from the dome section 404 and is used to couple the noise attenuator 206 to the bleed flow duct 202. The rim section 402 may be shaped substantially similar to that of the bleed flow duct 202, especially near the bleed air outlet 212. For example, in an embodiment in which the bleed flow duct 202 is substantially circular in cross section near the bleed air outlet 212, the rim section 402 may also substantially circular in shape. The rim section 402 may be attached to the bleed flow duct 202 using any one of numerous techniques such as, for example, fasteners, brazing, or welding. In other embodiments, a connector (not shown) may be included to attach the rim section 402 to the bleed flow duct 202.

The dome section 404 has the plurality of openings 218 formed therein. In an embodiment, the plurality of openings 218 may include hundreds or thousands of openings. The number of openings included may depend on the particular size of the dome section 404. The plurality of openings 218 may include two sets of openings that are either formed in different portions of the dome section 404 or have certain characteristics. In an example, a first set of openings 218-1 is formed in an outer peripheral region 406 of the dome section 404, and a second set of openings 218-2 is formed in a central region 408 (for clarity, shown bounded by a dotted line) of the dome section 404. Thus, the first set of openings 218-1 surrounds, or at least partially surrounds, the second set of openings 218-2. The first and second sets of openings 218-1, 218-2 may be spaced apart from each other, thereby defining a boundary region 412 between the outer peripheral region 406 and the central region 408. The boundary region 412 may or may not have openings 218.

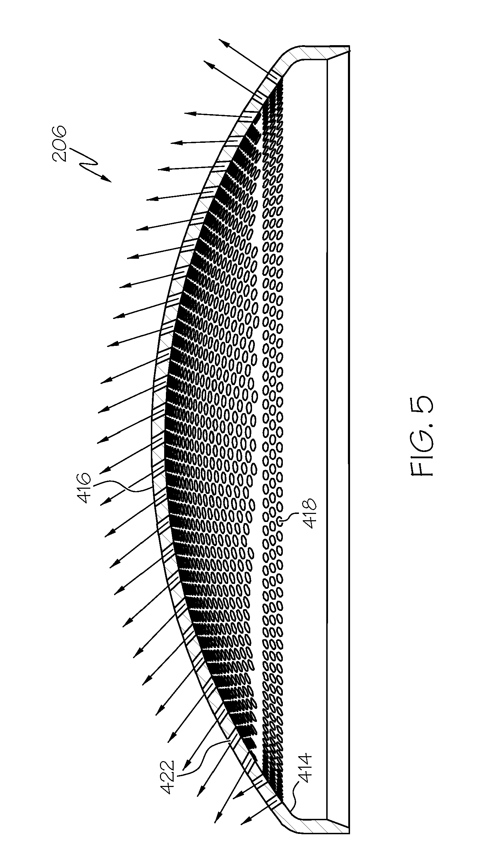

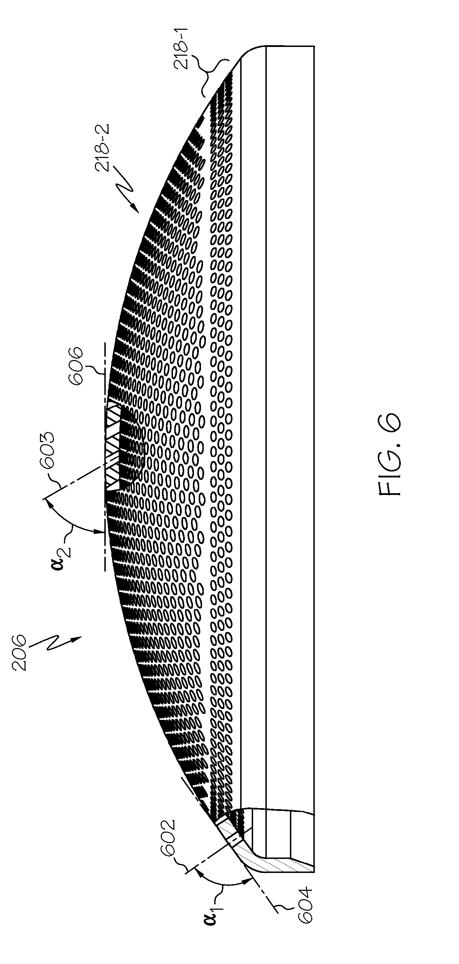

With additional reference to FIGS. 5 and 6, cross section and partial cross section views, respectively, of the noise attenuator depicted in FIGS. 3 and 4 are provided. Each of the openings 218 that comprise the first and second sets of openings 218-1, 218-2 extends between an inner side 414 and an outer side 416 of the dome section 404. Each opening 218 further includes an inlet port 418 that is coextensive with the dome inner side 414, and an outlet port 422 that is coextensive with the dome outer side 416, to thereby provide fluid communication between the dome inner and outer sides 414, 416. Thus, as described above, when the noise attenuator 206 is coupled to the bleed flow duct 202, the openings 218 facilitate bleed air flow through the noise attenuator 206.

In an embodiment, the openings 218 are each substantially cylindrical in shape and are thus each symmetrically disposed about a central axis 602, 603. However, other shapes and positioning of the openings 218 may alternatively be implemented. Each opening 218 may be formed at the same or different discharge angles. For example, the openings 218 located along different planes may be formed at different discharge angles, or openings located at different radii from the center of the dome section 404 may be formed at different discharge angles. In another example, each opening that comprises the first set of openings 218-1 may be formed at a first discharge angle (α₁) that is perpendicular, or at least substantially perpendicular, to a plane 604 that is tangent to its outlet port 422 and intersects its central axis 602, while each opening that comprises the second set of openings 218-2 is formed at a non-perpendicular discharge angle (α₂) relative to a plane 606 that is tangent to its outlet port 422 and intersects its central axis 603. The non-perpendicular discharge angle (α₂) may or may not vary for each opening 218-2. In an embodiment, discharge angle variation may depend, for example, on the radius of curvature of the dome section 404. In any case, the particular non-perpendicular discharge angle (α₂) may be selected to ensure that each of the second set of openings 218-2, whether located at a relatively upstream or downstream position, discharges bleed air in a direction that does not have a vector component in the bypass air flow direction 115. For example, in an embodiment in which the dome section 404 is formed with a radius of curvature of about 5.8 inches, the non-perpendicular discharge angle (α₂) may be about 60°. In other embodiments, the radius of curvature and the non- perpendicular discharge angle (α₂) may be greater or less.

By forming each opening of the first set of openings 218-1 at a perpendicular, or at least substantially perpendicular, discharge angle (α₁), stress in the dome outer peripheral region 406 is reduced relative to a dome section 404 having no openings or openings oriented similar to those of the second set of openings 218-2. Moreover, due to the curvature of the dome section 404, each of the openings of the second set of openings 218-2 at different positions on the dome section 404 relative to the bypass air flow direction 115 may be oriented differently. As a result, the direction in which bleed air is discharged from the second set of openings 218-2 into the bypass plenum 116 may also vary. More specifically, for bleed air discharged from the second set of openings 218-2, bleed air discharged from openings 218 located at relatively upstream positions from the direction of flow 115 (FIG. 2) of the bypass air is discharged in a direction that opposes bypass air flow more so than bleed air that is discharged from openings 218 that are located at relatively downstream positions from the direction of flow 115 of the bypass air.

Each opening 218 that comprises the first and second sets of openings 218-1, 218-2 may or may not be equally spaced from each other. Additionally, the number and size of the openings that comprise each set of openings 218-1, 218-2 are selected to provide a sufficient amount of flow area through the dome section 404 so as to not adversely restrict bleed air flow through the noise attenuator 206. The percent flow area through the dome section 404 may vary between, for example, approximately 20% and approximately 70% of the noise attenuator 206. For example, the percent flow area may be approximately 32% in a particular embodiment. In addition, the number of openings that comprise the first set of openings 218-1 may be selected to provide sufficient stress relief in the dome outer peripheral region 406.

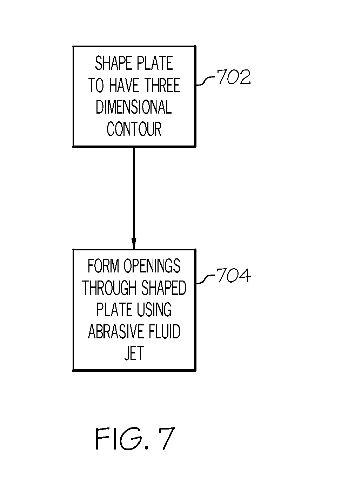

To form a noise attenuator that has a longer useful life as compared with conventional noise attenuators, a method 700 depicted in FIG. 7 may be employed. In an embodiment, the method 700 includes shaping a plate to have a three-dimensional contour, step 702. A plurality of openings is then formed through the shaped plate with an abrasive fluid jet, step 704. Each of these steps will now be discussed in detail below.

A plate is first shaped to have a three-dimensional contour, step 702. In an embodiment, the plate may be formed from a suitable material having a desired thickness. For example, the plate may be constructed of a metal such as, for example, nickel alloy, aluminum alloy, steel, or titanium or other material. In an embodiment, the plate may be substantially flat and may have a thickness of between about 0.125 mm to about 3.175 mm. In other embodiments, the plate may be thicker or thinner. The plate may be substantially circular and may have a diameter of between about 12.5 cm and about 25.5 cm; however, the particular diameter of the plate may depend on a particular size of the bleed air outlet. No matter the specific material and dimensions, the plate is formed into a three dimensional contour that includes a rim section surrounding a dome section. The dome section may have a curved shape and may be spherical, a rotation of an ellipse, or any other curved shape. In an embodiment, the dome section may be substantially spherical and may be formed by pressing the plate over a form having a desired curvature.

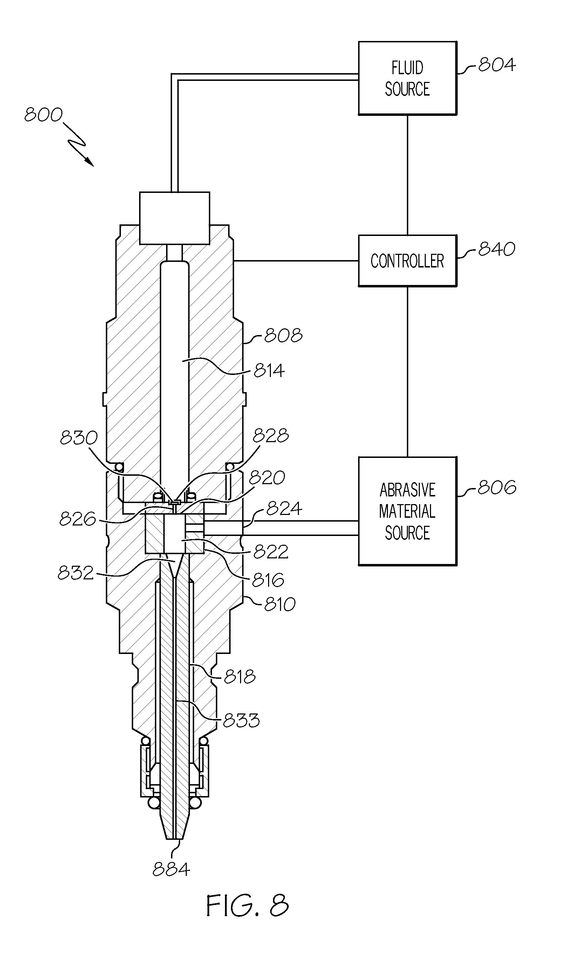

After the plate has been formed into the three dimensional contour, an abrasive fluid jet is used to form openings through the shaped plate, step 704. In an embodiment, the abrasive fluid jet is a stream of fluid that is compressed to a pressure of between about 40 ksi to about 60 ksi and forced out of an outlet of a nozzle at a desired velocity, where the fluid includes abrasive particles. A simplified schematic of an exemplary system 800 for providing the abrasive fluid jet is depicted in FIG. 8. Generally, the abrasive fluid jet system 800 may include a cutting head 802, a fluid source 804, and an abrasive material source 806. The cutting head 802 is configured to have a high-pressure fluid inlet body 808 coupled to a nozzle body 810. The high-pressure fluid inlet body 808 has a fluid flowpath 814 formed therein that communicates with the fluid source 804. In an embodiment, the fluid provided by the fluid source 804 may be water or other fluids. The fluid source 804 is configured to deliver fluid to the high-pressure fluid inlet body 808 at a pressure of between about 40 ksi and about 60 ksi and at a desired velocity, in an embodiment.

The nozzle body 810 receives the fluid from the fluid flowpath 814 and directs the fluid to a desired surface. In this regard, the nozzle body 810 includes a mixing component 816 and an outlet tube 818. In an embodiment, the mixing component 816 has a fluid inlet port 820, a mixing cavity 822, and an abrasive material inlet port 824. The fluid inlet port 820 communicates with a bore 826 through which fluid from the fluid source 804 may be directed. In some embodiments, a jewel 828, which may itself include an opening 830 may be disposed over the bore 826 such that the opening 830 communicates with the bore 826. Suitable jewels include diamonds, or other similar material.

In any case, the bore 826 (or opening 830 of the jewel 828) is configured to direct the fluid into the mixing cavity 822, where abrasive material directed from the abrasive material inlet port 824 is mixed with the fluid. In an embodiment, the pressurized fluid is directed through a plurality of particles at a desired velocity. In this way, the abrasive material from the abrasive material source 806 may be drawn into the mixing cavity 822 by a vacuum pressure created by the flow of the pressurized fluid therethrough. The abrasive material may be made up of particles that are shaped or sized to serve as an abrasive when impacted against a surface at a particular speed. Examples of suitable abrasive materials include, but are not limited to particles of garnet or silica. The particles may have diameters, the particular measurements of which may depend on the particular material used for the abrasive.

The abrasive fluid is directed out of the mixing cavity 822 via the outlet tube 818. The outlet tube 818 may be relatively long and cylindrical and may have a bore inlet 832 and a bore 833 formed therein. In an embodiment, the bore inlet 832 may have a substantially uniform diameter along its length, or, in another embodiment, may be tapered to act as a funnel to direct the abrasive fluid jet into the bore 833.

The abrasive fluid jet exits the bore 833 via a nozzle tip 834 in a relatively straight stream. In an embodiment, the nozzle tip 834 may be held a distance from the plate to form cuts therein. The distance may be a value that is suitable to allow the abrasive fluid jet to form at least a portion of one opening when impacted against a surface of the plate.

To form the particular shape and sizes of each opening 218 (FIG. 2), the abrasive fluid jet system 800 may be controlled by a controller 840. The controller 840 may be programmed to provide commands to the fluid source 804 to supply fluid to the cutting head 802, to provide commands to the abrasive material source 806 to supply abrasive material to the mixing cavity 822 (in some embodiments), and/or to provide commands to the cutting head 802 to move to various locations of the plate surface and to form cuts thereon to thereby form the openings. In an embodiment, the controller 840 may move the cutting head 802, and hence, the abrasive fluid jet, along a particular path, such as a circular path that represents an outer periphery of an opening. When the cutting head 802 completes the path, a single opening is formed. In another embodiment, the controller 840 may cause the abrasive water jet to impact the plate at a pressure sufficient to punch therethrough.

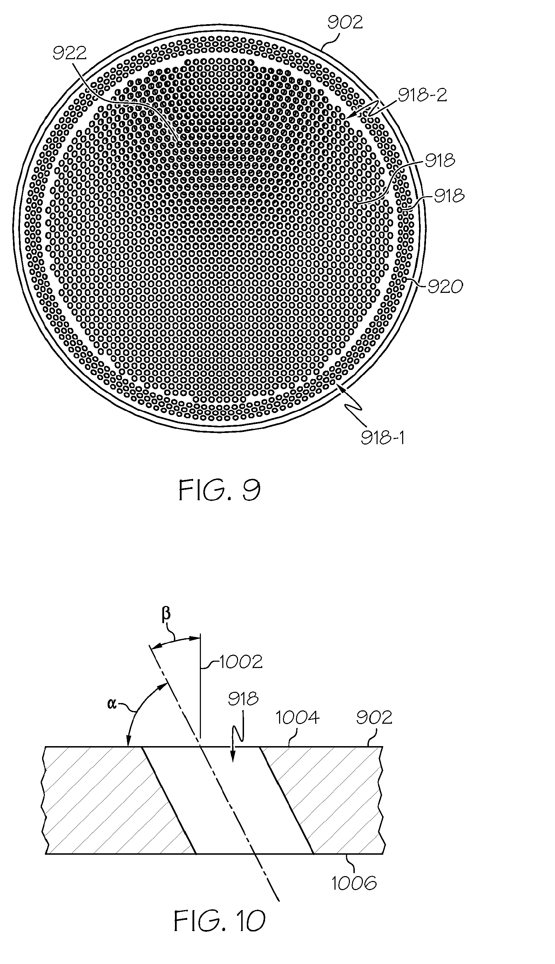

The controller 840 may also move across the surface of the plate to form the openings. In an embodiment, the controller 840 may cause the cutting head 802 to form a number of openings and/or a number of rows of openings. FIG. 9 is a top view of a plate 902 that may be used to manufacture the noise attenuator shown in FIGS. 3-6, according to an embodiment. As shown here, about 450 evenly spaced openings 918 configured in three concentric rows may be formed by the cutting head 802 (of FIG. 8), where the three rows comprise a first set of openings 918-1 in the rim section 920. The controller 840 (shown in FIG. 8) may further be programmed to form about 1700 evenly spaced openings 918 that comprise the second set of openings 918-2 in the dome section 922. In either case, more or fewer openings and rows may alternatively be formed. Additionally, the openings and rows may not be evenly spaced, in some embodiments.

The movement of the cutting head 802 and the pressure and velocity of the abrasive water jet may be controlled to thereby produce openings 918 having a particular size, shape, and angle relative to the plate surface. For example, the abrasive water jet may form openings having a diameter of about 2.159 ± 0.076 mm, to provide the desired amount of flow area and stress relief. In another example, each opening 918 that comprises the first set of openings 918-1 is formed through the plate 902 at the perpendicular, or at least substantially perpendicular, angle (α₁), and each opening 918 that comprises the second set of openings 918-2 is formed through the plate 902 at the same non-perpendicular angle (α₂). In particular, and with reference now to FIG. 10, an opening 918 may be formed at a predetermined angle (β) relative to a line 1002 that is normal to each major surface 1004, 1006 of the plate 902. This angle may vary, but in the depicted embodiment the predetermined angle (β) is about 30° relative to the normal line 1002. Additionally, a predetermined angle (β) of 30° relative to the normal line 1002, corresponds to the above-described non-perpendicular discharge angle (α₂) of 60° relative to the plate 902.

Returning to FIG. 2, after the noise attenuator is formed, it may be coupled to the bleed flow duct 202 and the bleed valve assembly 200 may then be installed in an engine. In doing so, the bleed valve assembly 200 may be installed such that when bleed air is discharged from the valve assembly 200, it is discharged in a direction that either opposes, or is substantially perpendicular to, the bypass air flow direction. In other words, some or substantially all of the bleed air is discharged from the bleed valve assembly 200 in a direction having a vector component that is in different directions as the bypass air flow direction 115.

By forming the openings of the noise attenuator with an abrasive water jet, the useful life of the noise attenuator may be improved over those manufactured by other methods. The abrasive water jet avoids the formation of recast material that can occur with other formation methods, such as with laser-drilling or electro-discharge milling. In particular, when such formation methods are used to form openings, heat from either the laser or electro-discharge machining component melts the plate through which openings are formed, and when the plate material cools the molten material resolidifies it becomes "recast material". Because resolidification of recast material occurs relatively rapidly, microcracks may form therein, and these microcracks may extend into other portions of the plate that do not include recast material. If this occurs, the microcracks may grow during component usage, thereby resulting in reduced useful life of the noise attenuator.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A method (700) of manufacturing a bleed valve noise attenuator (206), the method (700) comprising the steps of:
shaping (702) a plate (902) to have a three-dimensional contour; and
forming (704) a plurality of openings (218, 918) through the shaped plate (902) with an abrasive fluid jet to thereby form the bleed valve noise attenuator (206).

2. The method (700) of claim 1, wherein the step of shaping (702) comprises forming a three-dimensional contour in the plate (902) to include a rim section (402, 920) surrounding a dome section (404, 922).

3. The method (700) of claim 2, wherein the step of forming (704) a plurality of openings (218, 918) comprises:
forming a first set of openings (218-1, 918-1) in the dome section (404, 922) of the plate (902); and
forming a second set of openings (218-2, 918-2) in the rim section (402, 920) of the plate (902).

4. The method (700) of claim 3, wherein the step of forming (704) a plurality of openings (218, 918) comprises forming a set of openings (218, 918) in the dome section (404, 922) of the plate (902) such that each opening of the set of openings (218, 918) is formed at an angle (α₂) that is substantially non-perpendicular to a surface of the plate (902).

5. The method (700) of claim 3, wherein the step of forming (704) a plurality of openings (218, 918) comprises forming a set of openings (218, 918) in the rim section (402, 920) of the plate (902) such that each opening of the set of openings (218, 918) is formed at an angle (α₁) that is substantially perpendicular to a surface of the plate (902).

6. The method (700) of claim 1, wherein the step of forming (704) a plurality of openings (218, 918) comprises:
pressurizing a fluid to between about 40 ksi and about 60 ksi;
directing the pressurized fluid through a plurality of particles comprising particles of an abrasive material to form the abrasive fluid jet; and
impacting the abrasive fluid jet against a surface of the plate (902) to form at least a portion of one opening.

7. The method (700) of claim 1, wherein the plate (902) comprises a material selected from the group consisting of aluminum, nickel, steel, titanium, and alloys thereof.

8. The method (700) of claim 1, wherein the step of forming a plurality of openings (218, 918) comprises moving the abrasive fluid jet along a path representing an outer periphery of an opening to form a single opening.

9. The method (700) of claim 1, wherein the step of forming a plurality of openings (218, 918) comprises impacting the plate (902) with the abrasive fluid jet at a pressure sufficient to punch through the plate (902) to form a single opening.
